Europäisches Patentamt

European Patent Office

Office européen des brevets

(11) Publication number: **0 212 131 B1**

## (12) EUROPEAN PATENT SPECIFICATION

(45) Date of publication of patent specification: **27.01.93**  (51) Int. Cl.⁵: **H04N 1/393**

(21) Application number: **86108461.4**

(22) Date of filing: **20.06.86**

(54) **Digital image conversion apparatus.**

(30) Priority: **27.06.85 JP 139267/85**

(43) Date of publication of application:
**04.03.87 Bulletin 87/10**

(45) Publication of the grant of the patent:
**27.01.93 Bulletin 93/04**

(84) Designated Contracting States:
**DE FR**

(56) References cited:
**EP-A- 0 006 351**
**EP-A- 0 070 677**

**XEROX DISCLOSURE JOURNAL, vol. 9, no. 1, January - February 1984, pages 73-76, Stamford, Connecticut, US; R.G MATTESON: "Implementation technique for magnification. reduction. and windowing of electronic images"**

**XEROX DISCLOSURE JOURNAL, vol. 5, no. 1, January - February 1980, pages 115-116; H. LIAO: "Table look-up realization of digital filtering"**

(73) Proprietor: **International Business Machines Corporation**
**Old Orchard Road**
**Armonk, N.Y. 10504(US)**

(72) Inventor: **Suzuki, Naoshi**
**1-6-205 Zengyodanchi 3768-3 Fujisawa**
**Fujisawa-shi Kanagawa-ken(JP)**
Inventor: **Yanagisawa, Hiroshi**
**5-6-1-501 Isogo Isogo-ku**
**Yokohama-shi Kanagawa-ken(JP)**
Inventor: **Yokemura, Taketoshi**
**46 Kashiwaba Naka-ku**
**Yokohama-shi Kanagawa-ken(JP)**

(74) Representative: **Blakemore, Frederick Norman et al**
**IBM United Kingdom Limited Intellectual Property Department Hursley Park Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an image conversion apparatus in accordance with the preamble of claim 1.

Processing of digitized images often requires a change of the magnification ratio of the image - (enlargement or reduction of size), or a change of resolution. Although Japanese Laid-open Patent Specification JP-A-58 84358 discloses an image enlarging apparatus, it stores only a significance coefficient S in a table memory, so that it is impossible to variably control the addressing for reading data from an input pel memory by affecting input address calculation in relation to the significant coefficient of each storage location.

As the office automation develops, there is more and more demand to edit not only characters but also images. However, it becomes a problem that, since size and resolution of characters and images are not unified for current image input/output apparatuses, their local change or unity cannot be easily attained. It is therefore the object of the present invention to overcome these deficiencies of the prior art and to provide a flexible image conversion apparatus of the aforementioned kind.

This object is achieved by the invention of claim 1; embodiments of the invention are characterized in the dependent claims. According to the invention coefficient information is stored in combination with reference pel location information in a table memory; thereby it is possible to variably control the shifting of a reference pel region - (reference window) in response to the estimated pel location information when the magnification ratio is discretionally changed.

Since the pel density can be discretionally converted to increase or decrease, an image can be enlarged or reduced at any magnification ratio. In case where the magnification ratio of image is reduced, if data prior and after the conversion is inputted to a same display, the data after conversion is displayed as an image with reduced size because its pel density is lowered. If they are displayed in same size, the data after the conversion provides a coarse image with reduced resolution. For the enlargement, the results are opposite to the above.

The invention allows to increase (enlarge) or decrease (reduce) the magnification ratio (size) of an image even along each scanning line by allowing a discretionary increase or decrease of the pel density.

An embodiment of the invention is now described in detail with reference to the accompanying drawings, where

Figure 1 is a schematic diagram of apparatus of an embodiment of the invention;

Figure 2 is a conceptional diagram indicating relations of locations of pels to be set for the scaling;

Figure 3 is a conceptional diagram for enlargement;

Figure 4 is an example of reduction shown together with reference window regions W1 and W2; and

Figure 5 is a diagram showing a format of information being stored in a table memory.

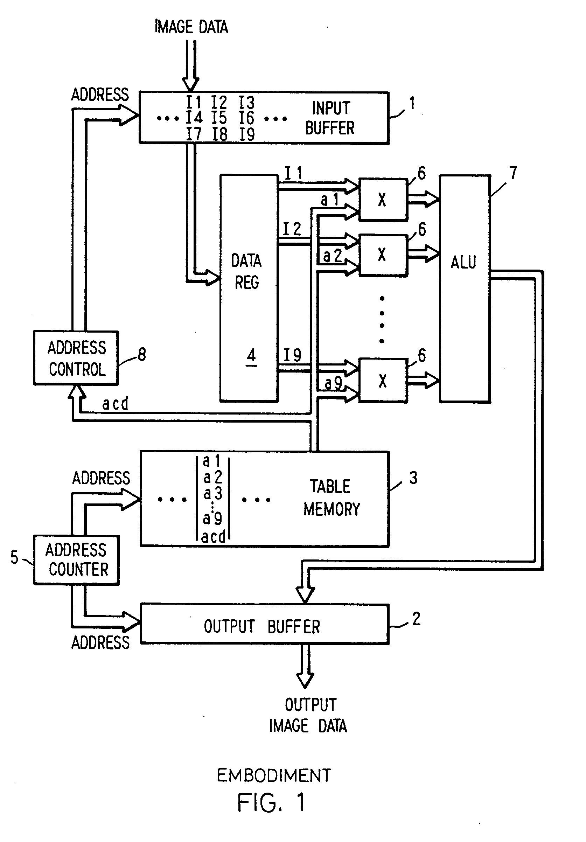

Figure 1 shows a schematic diagram of an apparatus of a preferred embodiment. An input buffer 1 is to store pel information of an original image to be changed for its magnification ratio. I1 - I9 represent intensity of each stored reference pel. An output buffer 2 is to store data of pel processed for the magnification change, and to output them to the following display unit and printer.

The image magnification ratio conversion of the invention follows a technique called Extended Convolution that extends the concept of Convolution.

Although, generally, in the convolution, the number of its reference pels and the locations of pels can be discretionally set, description is made for a case where pels of $3 \times 3$ are processed as one reference pel region (hereinafter called "reference window").

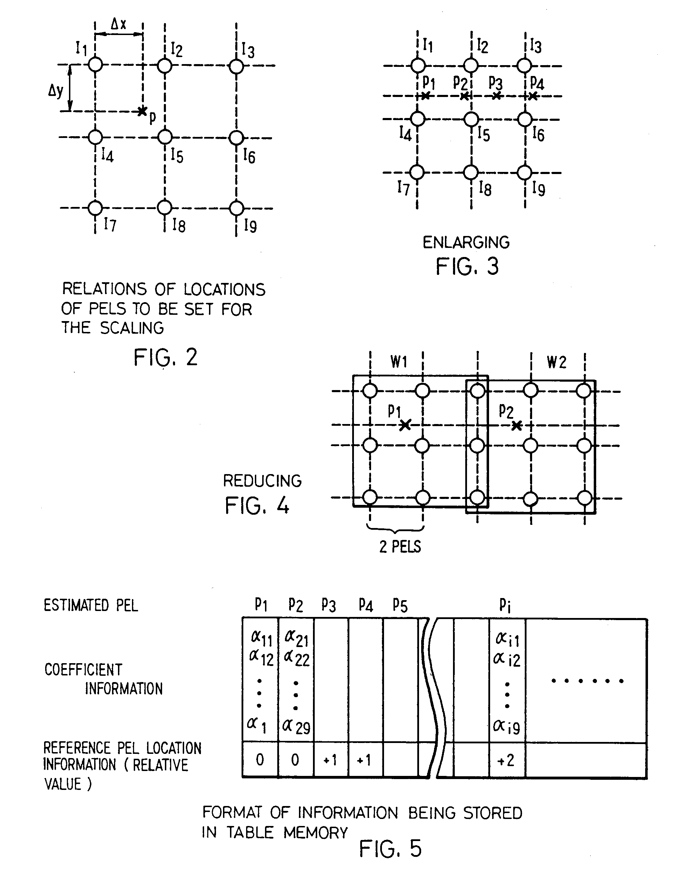

As shown in Figure 2, it is assumed that the intensity of each pel is I1 - I9, and that the location of a pel to be set for the magnification ratio change is a point p. Because the estimated (interpolated) intensity P at the point p is much affected by nearby reference pels, and little affected by remote reference pels, it can be expressed as the following equation using a function of $\Delta x$ and $\Delta y$:

$$P = I1 \cdot f1 \ (\Delta x, \ \Delta y) \ + \ \ldots \ + \ I9 \cdot f9 \ (\Delta x, \ \Delta y)$$

$$= \sum_{i=1}^{9} Ii \cdot fi \ (\Delta x, \ \Delta y) \ \ \ldots \ (1)$$

where

2

$$\sum_{i=1}^{9} f_i(\Delta x, \Delta y) = 1$$

In equation (1), $f_i(\Delta x, \Delta y)$ can be considered to be a rate indicating how much the intensity $I_i$ of each reference pel contributes to the intensity $P$ of point $p$, or contribution rate (where $i = 1$ -9). If this contribution rate is assumed to be $\alpha_1$, where $\alpha_i = f_i(\Delta x, \Delta y)$, equation (1) can be written as follows:

$$P = \sum_{i=1}^{9} \alpha_i \cdot I_i \quad \ldots \ldots (2)$$

The coefficients $\alpha_i$ are also called weight factors. In the usual operation for a simple space convolution, the location of the $3 \times 3$ reference window shifts by one pel location as one pel is outputted. However, in performing scaling of magnification ratio, it does not always shift by one pel location for one process.

Because the enlargement means, for example, to convert 300 pels/cm to 400 pels/cm, the locations of estimated pels p1 and p2 become closer as shown in Figure 3. In calculating intensity P1 and P2 at p1 and p2, this causes the rate of contribution of a same reference pel to p1 and p2 of each estimated pel, or the contribution rate, to become different. Thus, the values of intensity P1 and P2 can be expressed as follows:

$$P1 = \sum_{i=1}^{9} \alpha_i \cdot I_i$$

$$P2 = \sum_{i=1}^{9} \beta_i \cdot I_i$$

Because, in general, spacing of estimated pels becomes closer as the enlargement ratio becomes higher, frequency becomes higher for calculation of estimated values by a same reference window (that is, without shifting the reference window).

On the other hand, in the reduction, spacing of estimated pels becomes coarser as the reduction ratio becomes higher. If it is assumed that the reference pel (window) regions are W1 and W2 as shown in Figure 4, the displacement of locations between W1 and W2 are for two pels. Namely, in this example of reduction, it is sufficient to perform processing by shifting the reference window by two pels. In general, n pels are displaced in the reduction. In addition, this displacement is not constant in the processing of one scanning line for either enlargement and reduction, but varies constantly depending on location of an estimated pel. Therefore, it is required to control variably the displacement as the processing progresses.

As is seen from the above, it is required to add the following two control factors in change of magnification ratio by extending the conventional convolution operation.

(1) Control for providing different coefficients (contribution rate for estimated pel for each reference pel) for each estimated pel pi.

(2) Control for discretionally varying the location (address) of the reference pel according to the enlargement or reduction ratio.

To attain the above controls (which take time to be calculated for each estimated pel), the following are calculated in advance and stored in a table memory:

(1) A table (numeric table) for providing different coefficient for each estimated pel

(2) A table providing information representing the location of reference pel for each estimated pel.

They may be stored in a separate, large capacity storage and selectively transferred to the table memory as required.

Such tables have a format shown in Figure 5. The reference pel location information (relative value) is a value indicating how many pels the reference window should be shifted with respect to the previous reference window for calculating the next estimated pel. For example, in the example of enlargement in Figure 3, because the locations of p1 and p2 belong to a same reference window and their intensity P1 and P2 can be calculated by using the same reference pels of I1 -I9, shifting is 0, while the reference window is shifted by one reference pel for the p3 location. That is, it indicates that + 1 increment is required.

In the example of reduction in Figure 4, it is indicated that shifting by two pels or + 2 is required for p2.

The relative location control information for reference pels in the table as shown in Figure 5 enables to obtain an estimated value by indicating a reference window region to be used every time and by using the coefficient information. It becomes possible to vary the table to meet interpolation in any algorithm and any magnification ratio by arranging the coefficient information αij and the relative pel location information (address value) to be rewritten. It may be possible to perform only enlargement in a fixed ratio as in the above mentioned prior art (Japanese Laid-pen Patent Specification JP-A-58 84358. In such case, it is sufficient to make always the value of reference pel relative location information + 1.

Figure 1 shows a circuit configuration of image conversion apparatus according to the above mentioned concept.

A table memory 3 in Figure 1 has a set of coefficients a1 -a9 being used for the convolution operation, and address control data acd representing relative addresses of reference pels for each reference window. For a new pel output, values of I1 -I9 for 3 $\times$ 3 reference pels stored in a data register 4 and values of coefficients a1 -a9 in the table memory 3 stored at an address indicated by an address counter 5 at that moment are sequentially sent to a multiplier 6 and an arithmetic and logic unit (ALU) 7 for executing the convolution. The result is stored in an address of the output buffer 2 indicated by the address counter 5. Then, the addresses of the table memory 3 and the output buffer are incremented by + 1 to indicate a storage location for a coefficient and an output pel for the next convolution.

On the other hand, an address controller 8 decodes the value of acd read together with the coefficient in the table memory 3, indicates the location of reference window for the next convolution and stores the I value in the input buffer 1 that becomes newly required. For example, in a case of enlargement, the location of reference window may not be changed and the same I1 -I9 are used again. In a case of reduction, the address indicated by the address controller 8 may be changed by two or more. Furthermore, in a case of process such as filtering on which on-to-one conversion is premised, it is incremented only by + 1 for output of each pel similar to the value of address counter 5.

## Claims

1. Image conversion apparatus to transform a first digital image into a second digital image, comprising means (7) to calculate the intensity (P) of an image point (pel) P in the second image from the intensities (Ii) of m predetermined pals (reference window) in the first image according to the formula

$$P = \sum_{i=1}^{m} \alpha i \; Ii$$

αi being weight factors for the pels in the reference window,

characterized in that the calculation means (7) are operatively connected with a table (3) which can be loaded to store the weight factors (αi) for selected pels in the reference window and to store a shift amount (acd) by which the reference window has to be displaced in the first image for calculating the subsequent pel of the second image.

2. The apparatus of claim 1, wherein the table - (3) contains the weight and shift data for an complete scan line in the first image.

3. The apparatus of claim 1 or 2, wherein the shift amount is greater than the distance between pels in the first image if the second image is to be enlarged and smaller than the pel distance if the second image

4

is to be reduced.

4. The apparatus of one of the claims 1 to 3, wherein the conversion operation is a digital filtering operation.

**Patentansprüche**

1. Bildumsetzungsvorrichtung zum Überführen eines ersten digitalen Bildes in ein zweites digitales Bild, das Mittel (7) zum Berechnen der Intensität (p) eines Bildpunktes (pel) P im zweiten Bild aus den Intensitäten (Ii) von m vorbestimmten pels (Referenzfenster) in dem ersten Bild gemäß der Formel

$$P = \sum_{i=1}^{m} \alpha i \; Ii$$

aufweist, wobei $\alpha i$ Gewichtsfaktoren der pels im Referenzfenster sind,

**dadurch gekennzeichnet, daß** die Berechnungsmittel (7) operativ mit einer Tabelle (3) gekoppelt sind, die geladen werden kann, um die Gewichtsfaktoren ($\alpha i$) für ausgewählte pels im Referenzfenster zu speichern und um eine Verschiebegröße (acd) zu speichern, um die das Referenzfenster im ersten Bild versetzt werden muß, um das darauffolgende pel des zweiten Bildes zu berechnen.

2. Vorrichtung nach Anspruch 1, bei welcher die Tabelle (3) die Gewichtungs- und Verschiebedaten einer vollständigen Abtastzeile des ersten Bildes enthält.

3. Vorrichtung nach den Ansprüchen 2 oder 3, bei welcher die Verschiebegröße größer als der Abstand zwischen pels des ersten Bildes ist, falls das zweite Bild zu vergrößern ist, und kleiner als der pel-Abstand, falls das zweite Bild zu verkleinern ist.

4. Vorrichtung nach einem der Ansprüche 1 bis 3, bei welcher der Umsetzungsvorgang eine digitale Filterungsvorgang ist.

**Revendications**

1. Appareil de transformation d'images pour transformer une première image numérique en une deuxième image numérique, comprenant des moyens (7) pour calculer l'intensité (P) d'un élément d'image (pel) P dans la deuxième image à partir des intensités (Ii) de m pels prédéterminés (fenêtre de référence) dans la première image suivant la formule

$$P = \sum_{i=1}^{m} \alpha i \; Ii$$

$\alpha i$ étant des facteurs de pondération des pels dans la fenêtre de référence,

caractérisé en ce que les moyens de calcul (7) sont connectés pour leur fonctionnement à une table (3) qui peut être chargée pour emmagasiner les facteurs de pondération ($\alpha i$) des pels sélectionnés dans la fenêtre de référence, et pour emmagasiner une quantité de décalage (acd) suivant laquelle la fenêtre de référence doit être déplacée dans la première image pour calculer le pel suivant de la deuxième image.

2. Appareil selon la revendication 1, dans lequel la table (3) contient les données de pondération et de décalage d'une ligne de balayage complète dans la première image.

3. Appareil selon les revendications 1 ou 2, dans lequel la quantité de décalage est supérieure à la distance entre pels dans la première image si la deuxième image doit être agrandie, et inférieure à la distance entre pels si la deuxième image doit être réduite.

4. Appareil selon l'une quelconque des revendications 1 à 3, dans lequel l'opération de transformation est une opération de filtrage numérique.

EMBODIMENT

FIG. 1

RELATIONS OF LOCATIONS
OF PELS TO BE SET FOR
THE SCALING

FIG. 2

ENLARGING
FIG. 3

REDUCING
FIG. 4

2 PELS

ESTIMATED PEL

COEFFICIENT
  INFORMATION

REFERENCE PEL LOCATION
INFORMATION ( RELATIVE
VALUE )

FORMAT OF INFORMATION BEING STORED
IN TABLE MEMORY

FIG. 5